# EUROPÄISCHE PATENTSCHRIFT

(11) **EP 4 344 421 B1**
(45) Veröffentlichungstag und Bekanntmachung des Hinweises auf die Patenterteilung: **04.09.2024**
(21) Anmeldenummer: 23742184.7
(22) Anmeldetag: 05.07.2023
(51) Int. Cl.: B29D 12/02, B29C 64/124, B33Y 80/00, B29C 64/40, B33Y 10/00, G02C 5/00, B29L 12/00

(54) **VERFAHREN ZUR ADDITIVEN FERTIGUNG**
METHOD FOR ADDITIVE MANUFACTURING
PROCÉDÉ DE FABRICATION ADDITIVE

(30) Priorität: 07.07.2022 AT 505012022
(43) Veröffentlichungstag der Anmeldung: 03.04.2024
(73) Patentinhaber: Genera Printer GmbH, 1030 Wien (AT)
(72) Erfinder: STADLMANN, Klaus, 1020 Wien (AT)
(74) Vertreter: SONN Patentanwälte GmbH & Co KG
(86) Internationale Anmeldenummer: PCT/AT2023/060213
(87) Internationale Veröffentlichungsnummer: WO 2024/007042

(56) Entgegenhaltungen:
- US-A1- 2015 061 166
- US-A1- 2020 164 591
- US-A1- 2022 004 024

## Beschreibung

Die Erfindung betrifft ein Verfahren zur additiven Fertigung einer Komponente eines Brillengestells mittels Stereolithographie, wobei die Komponente wenigstens einen Brillenrahmen mit einem Innenrand umfasst, wobei eine innere Stützstruktur zur Abstützung des Brillenrahmens zusammen mit dem Brillenrahmen gefertigt wird, wobei die innere Stützstruktur der gefertigten Komponente mindestens an zwei gegenüberliegenden Stellen mit dem Innenrand verbunden ist, sodass diese Stellen gegeneinander abgestützt sind, wobei die Oberfläche der Komponente mindestens einen Verbindungsbereich aufweist, wobei der Verbindungsbereich in einer Verwendungsstellung des fertigen Brillengestells verdeckt ist, wobei eine äußere Stützstruktur vorgesehen ist, die mit der Komponente gefertigt wird, wobei eine Verbindung zwischen der äußeren Stützstruktur und der Komponente im Verbindungsbereich entsteht.

Es ist bekannt, Brillengestelle mittels Lasersintern herzustellen. WO 2011/089208 A1 offenbart in diesem Zusammenhang eine spezielle Oberflächenbehandlung.

Auch wurden schon zahlreiche Versuche unternommen, Brillengestelle oder deren Komponenten mittels Stereolithographie herzustellen. Die US 2020/0164591 A1 offenbart in diesem Zusammenhang eine spezielle Geometrie, um mechanische Komponenten und insbesondere Kanten im Verbindungsbereich eines Brillenbügels während einer Oberflächenbehandlung zu schützen.

US 2015/0061166 A1 bezieht sich auf eine Vorrichtung zur Herstellung von maßgefertigten Brillen. Das Gesicht eines Kunden wird gescannt und ein Brillenglas und/oder ein Brillengestell werden entsprechend den Scandaten mit einem 3D-Drucker gedruckt.

Ein Nachteil der bekannten Verfahren zur additiven Fertigung einer Komponente eines Brillengestells mittels Stereolithographie ist die Endbearbeitung. Diese ist erforderlich, um die bei diesem Druckverfahren unvermeidbaren Anbindungsstellen zu bearbeiten, sodass diese am fertigen Produkt nicht mehr störend und möglichst nicht mehr sichtbar sind. Das erfordert jedoch eine lokal unterschiedliche Bearbeitung der Oberfläche, die deshalb nur manuell durchgeführt werden kann. Der erforderliche manuelle Bearbeitungsschritt ist ein Hindernis für die Verbreitung von Stereolithografie für diese Anwendung.

Es ist eine Aufgabe der Erfindung, die Nachteile des Standes der Technik zu beseitigen oder zumindest zu verringern.

Die Erfindung sieht vor, dass mit der Fertigung der inneren Stützstruktur begonnen wird, nachdem die Verbindung zwischen der äußeren Stützstruktur und der Komponente entstanden ist. Mit anderen Worten, es wird zuerst die äußere Stützstruktur aufgebaut bis zum Verbindungsbereich. Ausgehend vom Verbindungsbereich wird mit der Fertigung der Komponente begonnen. Frühestens wenn die Komponente bis zumindest einer Stelle des Innenrands des wenigstens einen Brillenrahmens gefertigt wurde, kann ausgehend von und verbunden mit dieser oder einer anderen zu einem späteren Zeitpunkt verfügbaren Stelle des Innenrands des bis dahin gefertigten wenigstens einen Brillenrahmens die Fertigung der inneren Stützstruktur beginnen.

Aufgrund dieser Abfolge der Fertigung kann auf sämtliche an Sichtflächen der Komponente angebundene äußere Stützstrukturen verzichtet werden. Der mindestens eine Verbindungsbereich kann außerhalb der Sichtflächen der Komponente liegen. Es kann vorgesehen sein, dass es keine Überlappungen des mindestens einen Verbindungsbereich mit einer der Sichtflächen der Komponente gibt. Der Verbindungsbereich kann in einer Verwendungsstellung des fertigen Brillengestells beispielsweise durch einen Bügel oder eine Verblendung, z.B. eine aufgeklebte Metallblende, verdeckt sein, sodass er nicht zu den Sichtflächen der Komponente gehört. Als Sichtfläche wird hierbei eine Oberfläche verstanden, die vorzugsweise nur ästhetische oder physiologisch bedingte Anforderungen zu erfüllen hat. Mit anderen Worten ist die Oberfläche der mittels Stereolithografie hergestellten Komponente des Brillengestells im Verbindungsbereich nicht sichtbar, sondern verblendet oder verdeckt. Der Verbindungsbereich kann beispielsweise auf einer allgemeinen Funktionsfläche, Grenzfläche, Innenfläche, Schnittfläche, Kontaktfläche oder Trägerfläche der Komponente vorgesehen sein. Der Verbindungsbereich dient der Anbindung der Stützstruktur an der Komponente der Brille. Der Verbindungsbereich kann beim fertigen Brillengestell beispielsweise eine Verbindung mit einem Brillenbügel aufweisen. Durch die ermöglichte gänzliche Vermeidung von Anbindungen zu äußeren Stützstrukturen im Bereich der Sichtflächen der Komponente kann die Endbearbeitung der Komponente wesentlich vereinfacht und optional vollständig automatisiert werden. Da die Sichtflächen somit keine Unregelmäßigkeiten aufgrund von verfahrensbedingten Stützstrukturen aufweisen, kann durch eine gleichmäßige Oberflächenbehandlung (Waschen und/oder Spülen und/oder Schleifen) der Sichtflächen eine qualitativ hochwertige Oberfläche erzielt werden. Eine gleichmäßige Oberflächenbehandlung ist ohne manuelle Arbeitsschritte oder Eingriffe durchführbar.

Im Rahmen dieser Offenbarung bezeichnet eine Stützstruktur eine Struktur, die zusammen mit der Komponente gefertigt, z.B. gedruckt, wird, jedoch nicht Teil der Komponente oder des Brillengestells ist. Es handelt sich um eine verfahrensbedingte Struktur, die beispielsweise aufgrund der schichtweisen Fertigung bei der Verwendung von Stereolithografie erforderlich ist. Stützstrukturen können beispielsweise Abschnitte der Komponente halten bzw. stützen, die aufgrund des schichtweisen Aufbaus zu Beginn der Fertigung noch nicht zusammenhängen. Sie dienen auch der Anbindung der Komponente an eine etwaige Bauplattform, falls die Komponente aufgrund ihrer Geometrie nicht direkt an der Bauplattform anbinden soll. Eine Stützstruktur kann auch als Hilfsgeometrie, Supportgeometrie oder Opfergeometrie bezeichnet werden. Dass die Stützstruktur zusammen mit der Komponente gefertigt wird, bedeutet nicht zwingend, dass jede Schicht in nur einem einzigen Belichtungsschritt gefertigt werden muss. Eine Schicht der Komponente kann in einem einzigen Belichtungsdurchgang und somit gleichzeitigt mit einer Schicht der Stützstruktur belichtet werden oder in mehreren Belichtungsdurchgängen, wobei z.B. zuerst eine Schicht der Komponente belichtet werden kann, dann gewartet wird (beispielsweise 100 ms) und dann eine Schicht der Stützstruktur belichtet wird.

Eine innere Stützstruktur bezeichnet in dieser Offenbarung eine Stützstruktur, die mindestens zwei unterschiedliche Stellen des mittels additiver Fertigung hergestellten Objekts (hier der Komponente des Brillengestells) gegeneinander abstützt. Es findet somit eine Kraftübertragung innerhalb des gefertigten Objekts statt, über die innere Stützstruktur. Im Vergleich dazu bezeichnet eine äußere Stützstruktur eine Stützstruktur, mit der das hergestellte Objekt oder eine innere Stützstruktur gegen eine äußere, nicht im Rahmen des Fertigungsverfahrens hergestellte Fläche abgestützt wird, typischerweise eine Bauplattform. Eine zusammenhängende Stützstruktur kann im Allgemeinen sowohl eine innere Stützstruktur als auch eine äußere Stützstruktur bilden. Dabei können beispielsweise Kräfte je nach ihrer Richtung innerhalb des gefertigten Objekts oder auf eine äußere Fläche wirken. Z.B. kann eine äußere Stützstruktur vertikale Kräfte aufnehmen, die der Schwerkraft entgegenwirken, und an horizontal beabstandeten Stellen des gefertigten Objekts angreifen, sodass horizontale Kraftkomponenten innerhalb des Objekts aufgenommen werden können. Dadurch kann Verformungen und insbesondere unterschiedlichen Verformungen zwischen verschiedenen Abschnitten des Objekts entgegengewirkt werden.

In diesem Zusammenhang ist es zu verstehen, dass die mindestens zwei Stellen, an denen die innere Stützstruktur mit dem Innenrand verbunden ist, gegenüberliegend angeordnet sind. Solche gegenüberliegenden Stellen sind demnach nicht benachbart. Stattdessen sollten die Tangenten an den gegenüberliegenden Stellen des Innenrands entweder parallel und beabstandet sein oder einen Winkel von mindestens 30° einschließen. Die Offenbarung ist nicht auf diametral gegenüberliegende Stellen, bei denen diese Tangenten parallel und beabstandet sind, beschränkt, sondern erfasst auch beispielsweise in der Art von Winkelstreben angeordnete innere Stützstrukturen.

Die mindestens zwei Stellen können, müssen aber nicht mindestens zwei unterscheidbaren Strukturen entsprechen. Die innere Stützstruktur kann beispielsweise als Stützstrebe zwischen Stellen in zwei oder mehr getrennten Bereichen des Innenrands geformt sein. Die innere Stützstruktur kann aber auch beispielsweise entlang eines Bogens zwischen den mindestens zwei Stellen durchgehend mit dem Innenrand verbunden sein oder sogar durchgehend mit dem gesamten Innenrand verbunden sein. Die Verbindung zwischen der inneren Stützstruktur und dem Innenrand an mindestens zwei Stellen liegt bei der gefertigten Komponente vor. Eine entsprechende Verbindung kann bereits im zu druckenden Modell der Komponente vorgesehen sein oder es kann im Modell ein geringer Abstand zwischen der inneren Stützstruktur und dem Innenrand vorgesehen sein, der bei der Fertigung durch Ausdehnung der Materialien stellenweise oder durchgehend überbrückt wird.

Die innere Stützstruktur kann nach der Fertigstellung der Komponente des Brillengestells aus dem Brillenrahmen entfernt werden. Diese Entfernung kann manuell oder automatisch erfolgen, beispielsweise durch Herausdrücken aus dem Brillenrahmen. Die Verbindungen zwischen der inneren Stützstruktur und dem Brillenrahmen sind dergestalt, dass eine Entfernung der inneren Stützstruktur den Brillenrahmen und somit die Komponente insgesamt unbeschädigt hinterlässt. Zudem verbleiben von der inneren Stützstruktur keine Rückstände auf den Sichtflächen der Komponente, mit denen sie zu keinem Zeitpunkt verbunden war. Der Innenrand des Brillenrahmens ist - jedenfalls im Bereich der Stellen, an denen eine Verbindung mit der inneren Stützstruktur bestand - keine Sichtfläche, sondern wird in der Verwendungsstellung des fertigen Brillengestells mit mindestens einem Brillenglas von dem Brillenglas verdeckt. Der Innenrand kann beispielsweise eine Vertiefung oder Nut aufweisen, wobei die Stellen, an denen die innere Stützstruktur an den Innenrand anbindet, im Inneren der Vertiefung oder Nut liegen können, beispielsweise in der Mitte der Nut oder am Rand der Nut. Alternativ kann der Innenrand anstelle einer Vertiefung oder Nut beispielsweise eine Stufe aufweisen oder flach sein. Die innere Stützstruktur kann auch in diesen Fällen an den Innenrand anbinden.

Gemäß den hier verwendeten Definitionen weist eine Brille ein Brillengestell und mindestens ein Brillenglas auf. Das Brillenglas oder die Brillengläser werden üblicherweise in das fertige Brillengestell eingefasst. Diese Offenbarung befasst sich nur mit der Herstellung eines Brillengestells. Das Brillengestell weist wenigstens einen Brillenrahmen auf. Der Brillenrahmen ist jener Teil oder Abschnitt des Brillengestells, der mindestens ein Brillenglas zumindest teilweise umrandet. Ein Brillenrahmen entspricht einer vollständigen oder teilweisen Umrandung mindestens eines Brillenglases. Das Brillengestell kann aus einer oder mehreren Komponenten bestehen. Beispielsweise können der oder die Brillenrahmen als eine Komponente und zwei Brillenbügel als jeweils weitere Komponenten gefertigt werden und anschließend zu einem Brillengestell zusammengesetzt werden. Diese Offenbarung bezieht sich auf jene Komponente eines Brillengestells, die wenigstens einen Brillenrahmen, d. h. für wenigstens ein Brillenglas, aufweist. Dies kann die einzige Komponente des Brillengestells sein oder eine von mehreren Komponenten. Es sind auch Brillengestelle ohne Bügel oder mit nur einem Bügel von dieser Offenbarung umfasst.

Optional können die beiden gegenüberliegenden Stellen während des Fertigungsvorgangs im Wesentlichen auf einer Horizontale angeordnet sein oder es kann eine gedachte Verbindungslinie durch die beiden gegenüberliegenden Stellen während des Fertigungsvorgangs einen Winkel von weniger als 60°, insbesondere weniger als 45°, mit einer Horizontalen einschließen. Eine Aufgabe der Offenbarung ist eine Erhöhung der Stabilität der noch unfertigen Komponente während des Fertigungsvorgangs. Es ist günstig, wenn eine zu einem bestimmten Zeitpunkt während des Fertigungsvorgangs belichtete Schicht der inneren Stützstruktur beidseitig mit dem Innenrand verbunden ist. Dadurch können dünne und somit materialsparende Stützstrukturen verwendet werden, die selbst einer möglichst geringen Verformung unterworfen sind. Der mit der Horizontalen eingeschlossene Winkel hängt dabei auch davon ab, ob die bei einer Belichtung belichtete Schicht selbst horizontal oder schräg angeordnet ist. Die beiden gegenüberliegenden Stellen können zumindest vorübergehend auf einer Horizontalen angeordnet sein, d.h. zumindest während eines Teils des Fertigungsvorganges, insbesondere bevor der betreffende Brillenrahmen vollständig gefertigt wurde.

Die innere Stützstruktur kann optional an mehreren gegenüberliegenden Stellen mit dem Innenrand verbunden sein, wobei die gegenüberliegenden Stellen während des Fertigungsvorgangs jeweils paarweise im Wesentlichen auf einer Horizontale angeordnet sind. Die innere Stützstruktur kann beispielsweise aus mehreren parallelen Stützstreben oder einem Netz oder Gitter aus Stützstreben gefertigt werden.

Optional kann die innere Stützstruktur als durchgängige Scheibe gefertigt werden. Das hat den Vorteil, dass eine Planung der Geometrie der inneren Stützstruktur vereinfacht wird. Die durchgängige Scheibe kann durchgehend mit dem Innenrand verbunden sein oder beispielsweise in regelmäßigen Abständen Verbindungen mit dem Innenrand aufweisen.

Die innere Stützstruktur kann beispielsweise im Wesentlichen den Platz eines später im Brillenrahmen aufnehmbaren Brillenglases einnehmen. Dadurch wird auf einfache Weise sichergestellt, dass sämtliche Stellen mit Verbindungen zum Innenrand in der Verwendungsstellung des fertigen Brillengestells von dem Brillenglas verdeckt sind.

Optional können mindestens zwei innere Stützstrukturen innerhalb desselben Brillenrahmens vorgesehen sein, wobei die inneren Stützstrukturen an jeweils anderen gegenüberliegenden Stellen mit dem Innenrand verbunden sind, wobei die beiden jeweils gegenüberliegenden Stellen während des Fertigungsvorgangs im Wesentlichen auf einer Horizontalen angeordnet sind. Die inneren Stützstrukturen können optional zusammenhängen. Alternativ können die inneren Stützstrukturen als getrennte Stützstrukturen gebildet sein.

Beispielsweise können die mindestens zwei inneren Stützstrukturen in diesem Zusammenhang im Wesentlichen parallel angeordnet und durch einen während des Fertigungsvorgangs vertikalen Abstand getrennt sein. Damit kann im Vergleich zu einer durchgängigen Scheibe der Materialverlust durch die Stützstrukturen reduziert werden.

Die Komponente kann optional zwei durch einen Steg verbundene Brillenrahmen umfassen. Der Steg kann optional gleichzeitig ein Nasenstück des Brillengestells bilden. Jeder Brillenrahmen ist zur Aufnahme eines Brillenglases eingerichtet. Die Komponente kann beispielsweise symmetrisch bezüglich einer durch den Mittelpunkt des Stegs und im Wesentlichen normal auf den Steg verlaufende Symmetrieebene sein. Jeder der beiden Brillenrahmen kann mit einer eigenen inneren Stützstruktur gefertigt werden. Die inneren Stützstrukturen der beiden Brillenrahmen können optional miteinander verbunden sein. Eine solche Verbindung kann über eine äußere Stützstruktur oder über eine innere Stützstruktur erzielt werden.

In diesem Zusammenhang kann der Steg während des Fertigungsvorgangs vertikal angeordnet sein oder mit einer Vertikale einen Winkel von höchstens 45° einschließen. Die Orientierung der Komponente im Raum während des Fertigungsvorgangs kann somit im Wesentlichen seitlich hängend sein. D.h. die Achse mit der längsten Erstreckung der fertigen Komponente kann im Wesentlichen vertikal sein. Die Orientierung kann beispielsweise so sein, dass eine Achse durch den Verbindungsbereich und den (voraussichtlichen) Schwerpunkt der fertigen Komponente mit einer Vertikalen einen Achswinkel von höchstens 45° einschließt.

Die äußere Stützstruktur kann optional mit der inneren Stützstruktur verbunden gefertigt werden. Dadurch kann die innere Stützstruktur nach außen, z.B. an eine Bauplattform, abgestützt werden. Das ermöglicht, einen Teil der auf die innere Stützstruktur wirkenden Kräfte, insbesondere die Schwerkraft, nach außen abzuleiten. So können die von der Komponente aufzunehmenden Kräfte reduziert werden.

Die Komponente und die innere Stützstruktur können aus demselben Material gefertigt werden. Das Material kann beispielsweise ein lichthärtendes Material sein, insbesondere ein unter UV-Licht härtendes Material. Im Allgemeinen kann die innere Stützstruktur aus einem anderen Material als die Komponente gefertigt werden. Z.B. sind Materialien denkbar, die mittels eines Waschvorgangs gelöst und ausgewaschen werden können. Die Verwendung desselben Materials vereinfacht das Design und stellt sicher, dass die plastischen und mechanischen Eigenschaften in jedem Zustand kompatibel sind und beispielsweise keine Spannungen oder unbeabsichtigte Anbindungen entstehen. Das Material kann optional transparent oder eingefärbt sein.

In analoger Weise und mit denselben Effekten und Vorteilen betrifft die Erfindung ebenfalls eine Komponente eines Brillengestells, wobei die Komponente mittels Stereolithographie hergestellt wurde, wobei die Komponente wenigstens einen Brillenrahmen mit einem Innenrand aufweist, wobei innerhalb des Brillenrahmens eine innere Stützstruktur angeordnet ist, die mindestens an zwei gegenüberliegenden Stellen mit dem Innenrand verbunden ist, sodass diese Stellen gegeneinander abgestützt sind, wobei die innere Stützstruktur mit einer äußeren Stützstruktur verbunden ist.

Bei der offenbarten Komponente kann eine Verbindungsachse durch die beiden gegenüberliegenden Stellen im Wesentlichen normal auf eine Längserstreckung der äußeren Stützstruktur angeordnet sein. Die äußere Stützstruktur ist beispielsweise für die Aufnahme der Schwerkraft optimiert und die innere Stützstruktur ist beispielsweise für die Aufnahme von quer dazu wirkenden Kräften, die innerhalb der Komponente abgeleitet werden sollen, um die Anzahl der Anbindungspunkte von äußeren Stützstrukturen zu minimieren.

Wie bereits im Zusammenhang mit dem Verfahren erläutert und mit analogen Vorteilen kann auch bei der offenbarten Komponente vorgesehen sein, dass die innere Stützstruktur eine durchgängige Scheibe aufweist. Optional kann die innere Stützstruktur auch bei der offenbarten Komponente im Wesentlichen den Platz eines später im Brillenrahmen aufnehmbaren Brillenglases einnehmen.

Weiters kann die Oberfläche der Komponente mindestens einen Verbindungsbereich aufweisen, wobei der Verbindungsbereich in einer Verwendungsstellung des fertigen Brillengestells verdeckt ist, wobei die äußere Stützstruktur im Verbindungsbereich mit der Komponente verbunden ist.

Ganz allgemein und unabhängig von den oben und in den Ansprüchen definierten Merkmalen umfasst die Offenbarung auch ein Verfahren zur additiven Fertigung einer Komponente eines Brillengestells mittels Stereolithographie, wobei die Komponente wenigstens einen Brillenrahmen mit einem Innenrand umfasst, wobei die Oberfläche der Komponente mindestens einen Verbindungsbereich aufweist, wobei der Verbindungsbereich in einer Verwendungsstellung des fertigen Brillengestells verdeckt ist, wobei die Komponente ausgehend vom Verbindungsbereich gefertigt wird, wobei während des Fertigungsvorganges eine Achse durch den Verbindungsbereich und den (voraussichtlichen) Schwerpunkt der fertigen Komponente mit einer Vertikalen einen Achswinkel von höchstens 45° einschließt, wobei eine Stützstruktur zur Abstützung des Brillenrahmens zusammen mit dem Brillenrahmen gefertigt wird, wobei die Stützstruktur der gefertigten Komponente an mindestens einer Stelle mit dem Innenrand verbunden ist, wobei eine Tangente des Innenrands an dieser Stelle mit der Achse einen Randwinkel von höchstens 45° einschließt.

Die Komponente kann im Verbindungsbereich direkt an einer Bauplattform anbinden oder an einer zu vorgefertigten äußeren Stützstruktur. Der Achswinkel kann insbesondere höchstens 40°, insbesondere höchstens 35°, insbesondere höchstens 22,5° betragen. Je kleiner der Achswinkel, desto geringer ist das Drehmoment im Verbindungsbereich bei der Fertigstellung der Komponente. Da der Schwerpunkt der unfertigen Komponente während des Fertigungsvorganges naturgemäß wandert, kann ein von null verschiedener Achswinkel günstig sein. Der Randwinkel kann insbesondere höchstens 40°, insbesondere höchstens 35°, insbesondere höchstens 22,5° betragen. Die durch den Randwinkel definierten Bereiche des Innenrands schließen zumindest alle während des Fertigungsvorganges vertikalen Abschnitte mit ein. Eine Abstützung durch die Stützstruktur an diesen Stellen nimmt vorrangig Scherkräfte auf. Ein Vorteil einer Abstützung in diesem Bereich ist, dass der durch die noch unfertige (z.B. noch nicht vollständig ausgehärtete) Komponente gebildete Federweg verkleinert wird. Damit kann unterschiedlichen Ausdehnungen der Rahmenteile entgegengewirkt werden, die ansonsten aufgrund der im Allgemeinen bezüglich einer vertikalen Ebene asymmetrischen Form des Brillenrahmens auftreten können. Die Stützstruktur kann bei dieser Variante eine innere Stützstruktur oder eine äußere Stützstruktur oder eine Kombination sein.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 und 2 schematisch eine Komponente eines Brillengestells gemäß eines ersten Ausführungsbeispiels der vorliegenden Offenbarung nach Abschluss der Fertigung der Komponente auf einer Bauplattform;
Fig. 3 und 4 schematisch ein erweitertes Ausführungsbeispiel mit mehreren Komponente von entsprechend mehreren Brillengestellen;
Fig. 5 schematisch eine Vorderansicht einer Komponente eines Brillengestells gemäß eines dritten Ausführungsbeispiels;
Fig. 6 schematisch einen Schnitt der Komponente gemäß Fig. 5 entlang der Schnittlinie VI-VI; und
Fig. 7 bis 9 weitere Ansichten der Komponente gemäß Fig. 1 ohne die Bauplattform.

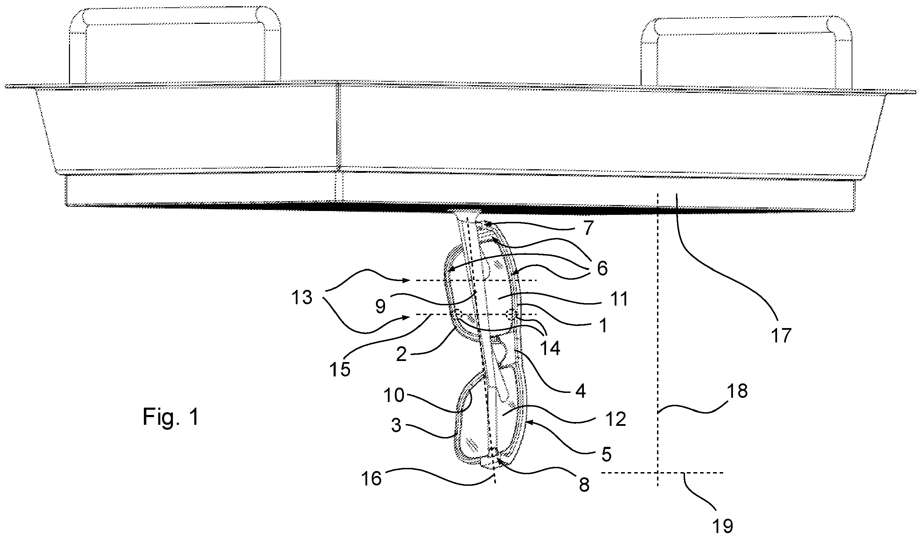

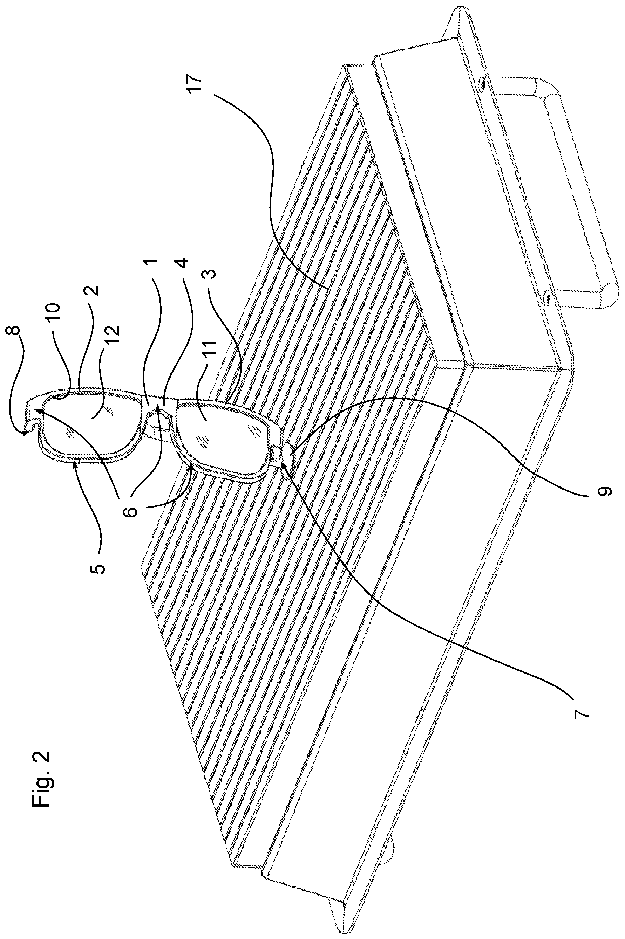

Fig. 1 und Fig. 2 zeigen eine Komponente 1 eines Brillengestells. Die Komponente 1 wurde mittels Stereolithographie hergestellt. Die Komponente 1 weist zwei Brillenrahmen 2, 3 auf. Die beiden Brillenrahmen 2, 3 sind durch einen Steg 4 verbunden. Die Oberfläche 5 der Komponente 1 weist Sichtflächen 6 und zwei Verbindungsbereiche 7, 8 auf. Die Verbindungsbereiche 7, 8 dienen der Verbindung mit jeweils einem Brillenbügel, z.B. über ein Scharnier. Die Verbindungsbereiche 7, 8 sind in einer Verwendungsstellung des fertigen Brillengestells durch die verbundenen Brillenbügel verdeckt. Eine äußere Stützstruktur 9 ist in beiden Verbindungsbereichen 7, 8 mit der Komponente verbunden.

Jeder Brillenrahmen 2, 3 weist jeweils einen Innenrand 10 auf. Innerhalb der beiden Brillenrahmen 2, 3 ist jeweils eine innere Stützstruktur 11, 12 in Form einer durchgängigen Scheibe angeordnet. Die innere Stützstruktur 11, 12 nimmt jeweils den Platz eines später im Brillenrahmen 2, 3 aufnehmbaren Brillenglases ein. Die innere Stützstruktur 11, 12 ist rundherum mit dem Innenrand 10 verbunden, wobei die Verbindung fertigungsbedingt stellenweise unterbrochen sein kann. Die Brillenrahmen 2, 3 sind daher über den gesamten Umfang des Innenrands 10 in sich abgestützt. Die innere Stützstruktur 11, 12 in jedem der beiden Brillenrahmen 2, 3 ist zusätzlich jeweils mit der äußeren Stützstruktur 9 verbunden. Sowohl die Komponente 1 selbst, als auch die äußere Stützstruktur 9 und die inneren Stützstrukturen 11, 12 bestehen aus demselben lichthärtenden Material.

Aufgrund der flächigen Durchgängigkeit der beiden inneren Stützstrukturen 11, 12 können jeweils mehrere Paare 13 gegenüberliegender Stellen 14 identifiziert werden, an denen die innere Stützstruktur 11, 12 mit dem Innenrand 10 verbunden ist. Bei zumindest manchen dieser Paare 13 gegenüberliegender Stellen 14 kann eine gedachte Verbindungslinie 15 durch die beiden jeweils gegenüberliegenden Stellen 14 eingezeichnet werden, wobei die gedachte Verbindungslinie 15 im Wesentlichen normal auf eine Längserstreckung 16 der äußeren Stützstruktur 9 angeordnet ist.

In der in Fig. 1 und Fig. 2 gezeigten Stellung ist die Komponente 1 an der äußeren Stützstruktur 9 von einer Bauplattform 17 hängend bzw. stehend dargestellt. Der Steg 4 schließt in dieser Stellung einen Winkel von weniger als 20° mit einer Vertikalen 18 ein. Während des Fertigungsvorgangs kann die Bauplattform 17 in einer horizontalen Ebene liegen und vertikal schrittweise verfahren werden, zur Herstellung der einzelnen Schichten. Dementsprechend sind zumindest manche der gegenüberliegenden Stellen 14 während des Fertigungsvorgangs paarweise auf einer Horizontale 19 angeordnet.

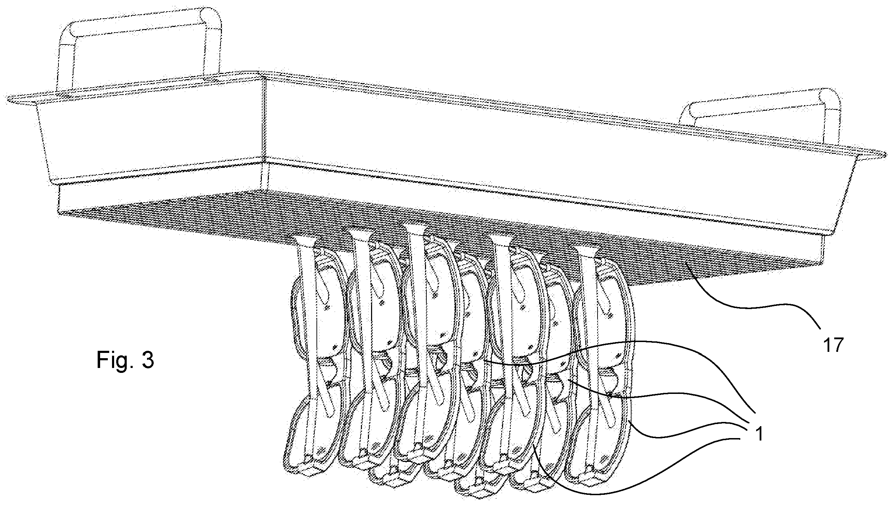

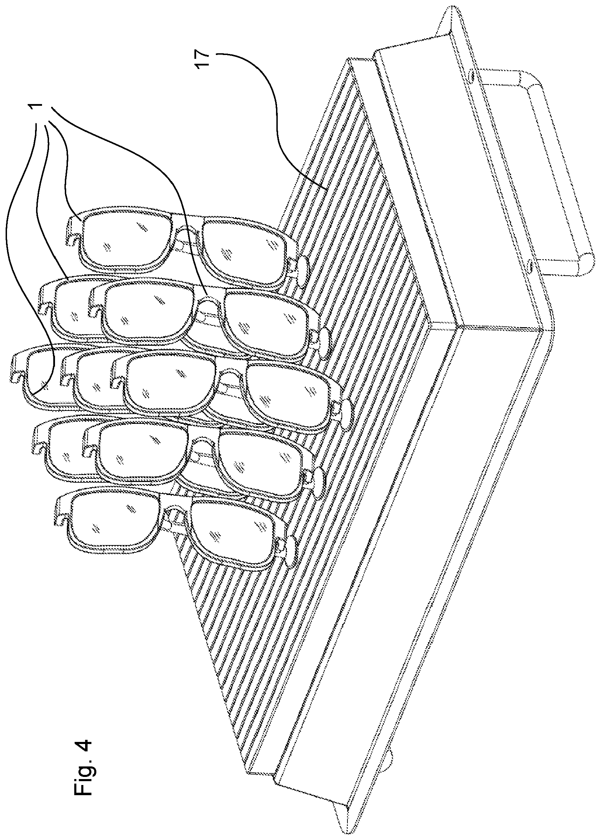

In Fig. 3 und Fig. 4 ist gezeigt, dass mehrere Komponenten 1, in diesem Beispiel neun, gleichzeitig in einem Fertigungsvorgang auf der Bauplattform 17 hergestellt werden können.

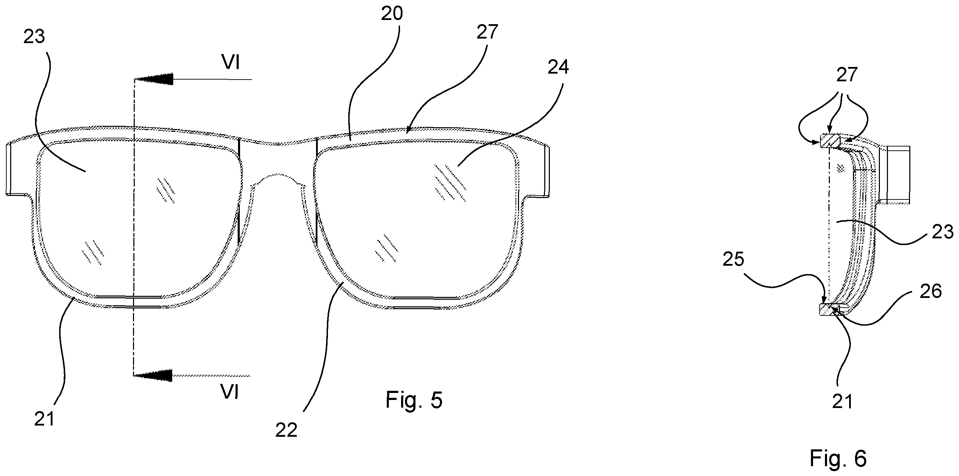

In Fig. 5 ist eine ähnliche wie in Fig. 1 aufgebaute Komponente 20 in einer Vorderansicht dargestellt. Es ist deutlich erkennbar, dass in jedem der beiden Brillenrahmen 21, 22 eine innere Stützstruktur 23, 24 angeordnet ist, die den Platz eines später darin aufzunehmenden Brillenglases einnimmt. In dem in Fig. 6 gezeigten Schnitt entlang der Linie VI-VI in Fig. 5 ist erkennbar, dass der Brillenrahmen 21 im Innenrand 25 eine Nut 26 aufweist. Die innere Stützstruktur 23 ist innerhalb der Nut 26 mit dem Innenrand 25 verbunden. Die Sichtflächen 27 der Komponente 20 sind somit frei von Verbindungen mit der inneren Stützstruktur 23 - und auch einer etwaigen äußeren Stützstruktur (siehe Fig. 1-4). Zudem ist in Fig. 6 erkennbar, dass die innere Stützstruktur 23 einen wesentlich geringeren Querschnitt als der Brillenrahmen 21 aufweist.

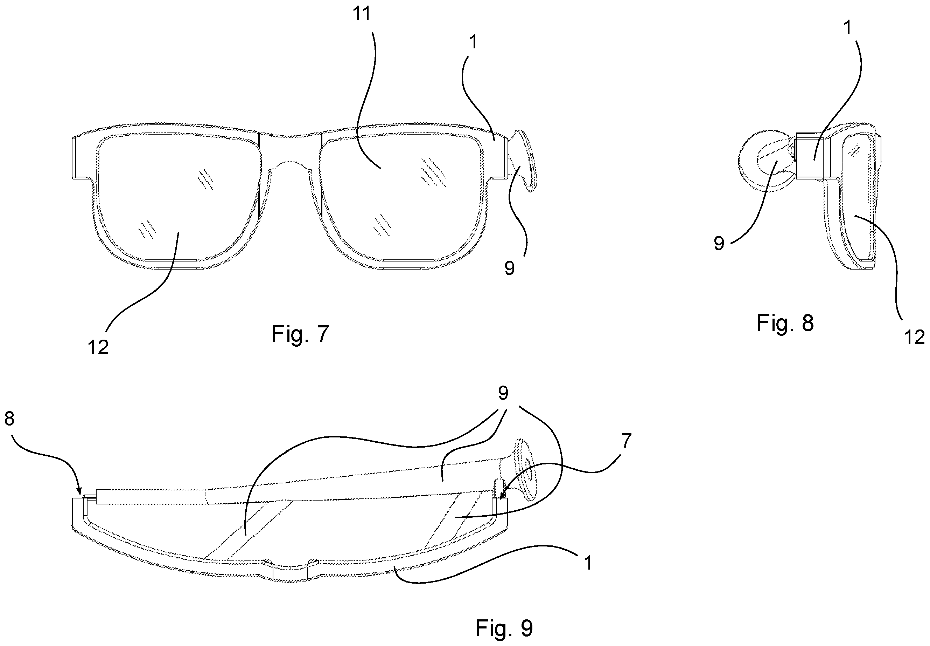

Die Figuren 7 bis 9 zeigen weitere Ansichten der in Fig. 1 und 2 gezeigten Komponente 1 mit ihrer inneren Stützstruktur und äußeren Stützstruktur. In Fig. 9 sind die Form der äußeren Stützstruktur 9 und die Verbindungsbereiche 7, 8 deutlich erkennbar.

## Patentansprüche

1. Verfahren zur additiven Fertigung einer Komponente (1) eines Brillengestells mittels Stereolithographie, wobei die Komponente (1) wenigstens einen Brillenrahmen (3) mit einem Innenrand (10) umfasst, wobei eine innere Stützstruktur (12) zur Abstützung des Brillenrahmens (3) zusammen mit dem Brillenrahmen (3) gefertigt wird, wobei die innere Stützstruktur (12) der gefertigten Komponente (1) mindestens an zwei gegenüberliegenden Stellen (14) mit dem Innenrand (10) verbunden ist, sodass diese Stellen (14) gegeneinander abgestützt sind, wobei die Oberfläche (5) der Komponente (1) mindestens einen Verbindungsbereich (7) aufweist, wobei der Verbindungsbereich (7) in einer Verwendungsstellung des fertigen Brillengestells verdeckt ist, wobei eine äußere Stützstruktur (9) vorgesehen ist, die mit der Komponente (1) gefertigt wird, wobei eine Verbindung zwischen der äußeren Stützstruktur (9) und der Komponente (1) im Verbindungsbereich (7) entsteht, wobei mit der Fertigung der inneren Stützstruktur (12) begonnen wird, nachdem die Verbindung zwischen der äußeren Stützstruktur (9) und der Komponente (1) entstanden ist.

2. Verfahren nach Anspruch 1, **dadurch gekennzeichnet, dass** die beiden gegenüberliegenden Stellen (14) während des Fertigungsvorgangs im Wesentlichen auf einer Horizontale (19) angeordnet sind oder eine gedachte Verbindungslinie (15) durch die beiden gegenüberliegenden Stellen (14) während des Fertigungsvorgangs einen Winkel von weniger als 60°, insbesondere weniger als 45°, mit einer Horizontalen (19) einschließt.

3. Verfahren nach Anspruch 1 oder 2, **dadurch gekennzeichnet, dass** die innere Stützstruktur (12) an mehreren gegenüberliegenden Stellen (14) mit dem Innenrand (10) verbunden ist, wobei die gegenüberliegenden Stellen (14) während des Fertigungsvorgangs jeweils paarweise im Wesentlichen auf einer Horizontale (19) angeordnet sind.

4. Verfahren nach einem der Ansprüche 1 bis 3, **dadurch gekennzeichnet, dass** die innere Stützstruktur (12) als durchgängige Scheibe gefertigt wird.

5. Verfahren nach einem der Ansprüche 1 bis 4, **dadurch gekennzeichnet, dass** die innere Stützstruktur (12) im Wesentlichen den Platz eines später im Brillenrahmen (3) aufnehmbaren Brillenglases einnimmt.

6. Verfahren nach einem der Ansprüche 1 bis 5, **dadurch gekennzeichnet, dass** mindestens zwei innere Stützstrukturen innerhalb desselben Brillenrahmens vorgesehen sind, wobei die inneren Stützstrukturen an jeweils anderen gegenüberliegenden Stellen mit dem Innenrand verbunden sind, wobei die beiden jeweils gegenüberliegenden Stellen während des Fertigungsvorgangs im Wesentlichen auf einer Horizontalen angeordnet sind.

7. Verfahren nach Anspruch 6, **dadurch gekennzeichnet, dass** die mindestens zwei inneren Stützstrukturen im Wesentlichen parallel angeordnet und durch einen während des Fertigungsvorgangs vertikalen Abstand getrennt sind.

8. Verfahren nach einem der Ansprüche 1 bis 7, **dadurch gekennzeichnet, dass** die Komponente (1) zwei durch einen Steg (4) verbundene Brillenrahmen (2, 3) umfasst.

9. Verfahren nach Anspruch 8, **dadurch gekennzeichnet, dass** der Steg (4) während des Fertigungsvorgangs vertikal angeordnet ist oder mit einer Vertikale (18) einen Winkel von höchstens 45° einschließt.

10. Verfahren nach einem der Ansprüche 1 bis 9, **dadurch gekennzeichnet, dass** die äußere Stützstruktur (9) mit der inneren Stützstruktur (12) verbunden gefertigt wird.

11. Verfahren nach einem der Ansprüche 1 bis 10, **dadurch gekennzeichnet, dass** die Komponente (1) und die innere Stützstruktur (12) aus demselben Material, insbesondere aus einem lichthärtenden Material, gefertigt werden.

12. Komponente (1) eines Brillengestells, wobei die Komponente (1) mittels Stereolithographie hergestellt wurde, wobei die Komponente (1) wenigstens einen Brillenrahmen (3) mit einem Innenrand (10) aufweist, wobei innerhalb des Brillenrahmens (3) eine innere Stützstruktur (12) angeordnet ist, die mindestens an zwei gegenüberliegenden Stellen (14) mit dem Innenrand (10) verbunden ist, sodass diese Stellen (14) gegeneinander abgestützt sind, wobei die innere Stützstruktur (12) mit einer äußeren Stützstruktur (9) verbunden ist.

13. Komponente (1) nach Anspruch 12, **dadurch gekennzeichnet, dass** eine gedachte Verbindungslinie (15) durch die beiden gegenüberliegenden Stellen (14) im Wesentlichen normal auf eine Längserstreckung (16) der äußeren Stützstruktur (9) angeordnet ist.

14. Komponente (1) nach Anspruch 12 oder 13, **dadurch gekennzeichnet, dass** die innere Stützstruktur (12) eine durchgängige Scheibe aufweist.

15. Komponente (1) nach einem der Ansprüche 12 bis 14, **dadurch gekennzeichnet, dass** die Oberfläche (5) der Komponente (1) mindestens einen Verbindungsbereich (7) aufweist, wobei der Verbindungsbereich (7) in einer Verwendungsstellung des fertigen Brillengestells verdeckt ist, wobei die äußere Stützstruktur (9) im Verbindungsbereich (7) mit der Komponente (1) verbunden ist.

## Claims

1. Method for additively manufacturing a component (1) of an eyeglass structure
by means of stereolithography, wherein the component (1) comprises at least one eyeglass frame (3) having an inner edge (10), wherein an inner support structure (12) for supporting the eyeglass frame (3) is manufactured together with the eyeglass frame (3), wherein the inner support structure (12) of the manufactured component (1) is connected to the inner edge (10) at least at two opposite points (14) so that these points (14) are supported with respect to one another, wherein the surface (5) of the component (1) comprises at least one connecting region (7), wherein the connecting region (7) is concealed in a use position of the finished eyeglass structure, wherein an outer support structure (9) is provided, which is manufactured together with the component (1), wherein a connection between the outer support structure (9) and the component (1) is created in the connecting region (7), wherein manufacturing of the inner support structure (12)
is started after the connection between the outer support structure (9) and the component (1) has been created.

2. Method according to claim 1, **characterised in that** the two opposite points (14) are arranged substantially on a horizontal line (19) during the manufacturing process or an imaginary connecting line (15) through the two opposite points (14) forms an angle of less than 60°, in particular less than 45°, with a horizontal (19) during the manufacturing process.

3. Method according to claim 1 or 2, **characterised in that** the inner support structure (12) is connected to the inner edge (10) at a plurality of opposite points (14), the opposite points (14) being arranged in pairs substantially on a horizontal line (19) during the manufacturing process.

4. Method according to any of claims 1 to 3, **characterised in that** the inner support structure (12) is manufactured as a continuous disc.

5. Method according to any of claims 1 to 4, **characterised in that** the inner support structure (12) substantially takes the place of an eyeglass lens which can later be accommodated in the eyeglass frame (3).

6. Method according to any of claims 1 to 5, **characterised in that** at least two inner support structures are provided within the same eyeglass frame, the inner support structures being connected to the inner edge at different opposite points, the two opposite locations being arranged substantially on a horizontal line during the manufacturing process.

7. Method according to claim 6, **characterised in that** the at least two inner support structures are substantially parallel and are separated by a vertical distance during the manufacturing process.

8. Method according to any of claims 1 to 7, **characterised in that** the component (1) comprises two eyeglass frames (2, 3) connected by a bridge (4).

9. Method according to claim 8, **characterised in that** the bridge (4) is arranged vertically during the manufacturing process or forms an angle of at most 45° with a vertical line (18).

10. Method according to any of claims 1 to 9, **characterised in that** the outer support structure (9) is manufactured so that it is connected to the inner support structure (12).

11. Method according to any of claims 1 to 10, **characterised in that** the component (1) and the inner support structure (12) are manufactured from the same material, in particular from a light-curing material.

12. Component (1) of an eyeglass structure, wherein the component (1) was produced by means of stereolithography, wherein the component (1) comprises at least one eyeglass frame (3) having an inner edge (10), wherein an inner support structure (12) is arranged within the eyeglass frame (3) and is connected to the inner edge (10) at least at two opposite points (14) so that these points (14) are supported with respect to one another, wherein the inner support structure (12) is connected to an outer support structure (9).

13. Component (1) according to claim 12, **characterised in that** an imaginary connecting line (15) through the two opposite points (14) is arranged substantially normally to a longitudinal extension (16) of the outer support structure (9).

14. Component (1) according to claim 12 or 13, **characterised in that** the inner support structure (12) comprises a continuous disc.

15. Component (1) according to any of claims 12 to 14, **characterised in that** the surface (5) of the component (1) comprises at least one connecting region (7), the connecting region (7) being concealed in a use position of the finished eyeglass structure, the outer support structure (9) being connected to the component (1) in the connecting region (7).

## Revendications

1. Procédé de fabrication additive d'un composant (1) d'une monture de lunettes au moyen de stéréolithographie, dans lequel le composant (1) comprend au moins un cadre de lunettes (3) avec un bord interne (10), dans lequel une structure d'appui interne (12) est fabriquée conjointement avec le cadre de lunettes (3) pour le soutien du cadre de lunettes (3), dans lequel la structure d'appui interne (12) du composant fabriqué (1) est reliée, au niveau d'au moins deux points opposés (14), avec le bord interne (10), de sorte que ces points (14) sont appuyés l'un contre l'autre, dans lequel la surface (5) du composant (1) comprend au moins une partie de liaison (7), dans lequel la partie de liaison (7) est dissimulée dans une position d'utilisation de la monture de lunettes fabriquée, dans lequel une structure d'appui externe (9) est prévue, qui est fabriquée avec le composant (1), dans lequel une liaison entre la structure d'appui externe (9) et le composant (1) en résulte dans la partie de liaison (7), dans lequel on commence la fabrication de la structure d'appui interne (12) une fois que la liaison entre la structure d'appui externe (9) et le composant (1) est réalisée.

2. Procédé selon la revendication 1, **caractérisé en ce que** les deux points opposés (14) sont disposés, pendant le processus de fabrication, globalement sur une horizontale (19) ou une ligne de liaison imaginaire (15) à travers les deux points opposés (14) forme, pendant le processus de fabrication, un angle inférieur à 60°, plus particulièrement inférieur à 45°, avec une horizontale (19).

3. Procédé selon la revendication 1 ou 2, **caractérisé en ce que** la structure d'appui interne (12) est relié, au niveau de plusieurs points opposés (14), avec le bord interne (10), dans lequel les points opposés (14) sont disposés, pendant le processus de fabrication, respectivement par paires globalement sur une horizontale (19).

4. Procédé selon l'une des revendications 1 à 3, **caractérisé en ce que** la structure d'appui interne (12) est réalisée sous la forme d'un disque continu.

5. Procédé selon l'une des revendications 1 à 4, **caractérisé en ce que** la structure d'appui interne (12) prend globalement la place d'un verre de lunette pouvant être logé ultérieurement dans le cadre de lunettes (3).

6. Procédé selon l'une des revendications 1 à 5, **caractérisé en ce qu'**au moins deux structures d'appui internes sont prévues à l'intérieur du même cadre de lunettes, dans lequel les structures d'appui internes sont reliées, au niveau d'autres points opposés, avec le bord interne, dans lequel les deux points respectivement opposés sont disposés, pendant le processus de fabrication, globalement sur une horizontale.

7. Procédé selon la revendication 6, **caractérisé en ce que** les au moins deux structures d'appui internes sont disposées globalement parallèlement et sont séparées par une distance verticale pendant le processus de fabrication.

8. Procédé selon l'une des revendications 1 à 7, **caractérisé en ce que** le composant (1) comprend deux cadres de lunettes (2, 3) reliés par une nervure (4).

9. Procédé selon la revendication 8, **caractérisé en ce que** la nervure (4) est disposée verticalement pendant le processus de fabrication ou forme, avec une verticale (18), un angle de 45° maximum.

10. Procédé selon l'une des revendications 1 à 9, **caractérisé en ce que** la structure d'appui externe (9) est fabriquée de façon à être reliée avec la structure d'appui interne (12).

11. Procédé selon l'une des revendications 1 à 10, **caractérisé en ce que** le composant (1) et la structure d'appui interne (12) sont constitués du même matériau, plus particulièrement d'un matériau photodurcissable.

12. Composant (1) d'une monture de lunettes, dans lequel le composant (1) a été fabriqué par stéréolithographie, dans lequel les composant (1) comprend au moins un cadre de lunettes (3) avec un bord interne (10), dans lequel, à l'intérieur du cadre de lunettes (3), est disposée une structure d'appui interne (12), qui est reliée, au moins au niveau de deux points opposés (14), avec le bord interne (10), de sorte que ces points (14) sont appuyés l'un contre l'autre, dans lequel la structure d'appui interne (12) est reliée avec une structure d'appui externe (9).

13. Composant (1) selon la revendication 12, **caractérisé en ce qu'**une ligne de liaison imaginaire (15) à travers les deux points opposés (14) sont disposés de manière globalement perpendiculaire sur une extension longitudinale (16) de la structure d'appui externe (9).

14. Composant (1) selon la revendication 12 ou 13, **caractérisé en ce que** la structure d'appui interne (12) comprend un disque continu.

15. Composant (1) selon l'une des revendications 12 à 14, **caractérisé en ce que** la surface (5) du composant (1) comprend au moins une partie de liaison (7), dans lequel la partie de liaison (7) est dissimulée dans une position d'utilisation de la monture de lunettes fabriquée, dans lequel la structure d'appui externe (9) est reliée, dans la partie de liaison (7), avec le composant (1).
